# EUROPEAN PATENT SPECIFICATION

(11) **EP 3 569 432 B1**
(45) Date of publication and mention of the grant of the patent: **06.10.2021**
(21) Application number: 18172509.4
(22) Date of filing: 15.05.2018
(51) Int. Cl.: B60J 7/02

(54) **VEHICLE ROOF TOP CRASH OPENING PREVENTION**
SCHUTZ GEGEN ÖFFNEN DES DACHS VON FAHRZEUGEN BEI UNFÄLLEN
PRÉVENTION D'OUVERTURE DE TOIT DE VÉHICULE EN CAS DE COLLISION

(43) Date of publication of application: 20.11.2019
(73) Proprietor: Volvo Car Corporation, 40 531 Göteborg (SE)
(72) Inventor: Dominique, Christer, 42353 Torslanda (SE); Zeqiraj, Bekim, 42339 Göteborg (SE); Dryselius, Joakim, 42167 Västra Frölunda (SE); Carlsson, Daniel, 44534 Bohus (SE)
(74) Representative: Kransell & Wennborg KB

(56) References cited:
- EP-A2- 1 044 837
- DE-A1- 10 040 044
- DE-A1-102004 003 911
- US-B1- 6 309 014

## Description

### Field of the Invention

The present invention generally relates to a roof panel arrangement for a vehicle.

### Background of the Invention

Safety in the automotive industry is of high importance both with respect to vehicle-pedestrian impacts and vehicle-vehicle impact. Most modern vehicles today have relatively advanced safety systems including airbags for protection of occupants of the vehicle, and external sensors on the vehicle to provide collision warnings or even automatic braking in case of a predicted collision.

Apart from electronic safety systems, the structure of the vehicle itself may also be particularly designed to behave in a predetermined way in case of an impact with a foreign object or a pedestrian. This applies for example to the hood of the vehicle and to other front structures of the vehicle which often have e.g. collapsible crash beams.

Some vehicles are provided with openable roof top panels. The roof top panels are often opened by sliding the roof top panel along a railing attached to the roof of the vehicle. In the event of a collision, the acceleration forces may cause the rooftop panel to accelerate in the railing and brake loose from its attachment (e.g. the railing) to the vehicle and consequently cause person injuries or damage to other vehicles. US6309014 discloses an example roof arrangement for a vehicle. DE102004003911 discloses shading system of a motor vehicle.

Therefore, the roof top panels and the associated railing arrangement are often mechanically strengthened in order for them to withstand the high acceleration forces exerted on the vehicle in the event of a collision. However, the brute mechanical strengthening requires additional parts which inevitably increase the number of parts that may fail if subjected to a collision, and in many cases the brute mechanical strengthening is not sufficient to withstand the high acceleration forces.

Accordingly there is a need for improved safety functionality to prevent that a roof top panel of a vehicle falls off the vehicle in the event of a collision.

### Summary

In view of above, it is an object of the present invention to provide a roof panel arrangement for a vehicle with improved safety functionality to prevent that a roof top panel of a vehicle falls off the vehicle in the event of a collision.

According to a first aspect of the invention, there is provided a roof panel arrangement for a vehicle, comprising: a slider attached to a roof panel, the slider is slidably attached to a rail profile for opening a roof window by sliding the roof panel along a longitudinal axis of the vehicle, an inertia pawl rotatably attached to the slider at a rotation axis generally perpendicular to an axis parallel with the longitudinal axis of the rail profile, the inertia pawl comprises a main body and an engaging portion arranged on opposite sides of the rotation axis, wherein the rotation of the inertial pawl about the rotation axis is spring loaded with a neutral position with the engaging portion closer to the rail profile than the main body, the engaging portion is separated from the rail profile in the neutral position, wherein the inertia of the main body and the spring properties of the spring are such that, when under the influence of an acceleration in a first direction exceeding a first threshold acceleration, the inertia pawl rotates away from the neutral position in a first rotational direction such that the engaging portion rotates into a first intercepting position for causing a braking force for at least partly preventing a sliding motion of the slider in a first sliding direction, and wherein the inertia of the main body and the spring properties of the spring are such that, when under the influence of an acceleration in a second direction exceeding a second threshold acceleration, the inertia pawl rotates away from the neutral position in a second rotational direction opposite the first rotational direction such that the engaging portion rotates into a second intercepting position for causing a braking force for at least partly preventing a sliding motion of the slider in a second sliding direction.

The present invention is based on the realization that the high acceleration forces occurring during a crash event with a vehicle may be utilized for preventing the vehicle roof panel from sliding along the rail with such high speed that may cause the roof panel to fall out from the railing.

In the event of a collision with a vehicle, high forces are usually exerted on the vehicle. When the forces affect a moving part on the vehicle such as the roof panel of the vehicle, the roof panel will begin to slide in the railing. If the sliding motion is not at least slowed down, then the roof panel risks gaining enough speed to brake loose from the railing. With the inventive concept, the acceleration forces are taken advantage of, for moving an inertia pawl into a position such that the sliding motion of the roof panel is at least slowed down, thus the kinetic energy of the roof panel is absorbed at least partly by the inertia pawl in its intercepting positions.

A slider is a structure which supports the roof panel and which is attached to a railing. The slider may be provided in the form of a "frame" arranged to hold the roof panel, and comprising a feet that matches the rail profile such that the feet of the slider may be slid into the rail profile.

The inertia pawl may be provided in many different forms and shapes. However, the main functionality is that the inertia pawl is activated by acceleration above threshold acceleration. Accordingly, it is only when subjected to sufficiently high acceleration that the force from inertia pawl attempting to rotate about its rotation axis, overcomes the counteracting force from the spring. For this, the inertia pawl and the spring are tailored such that the inertia of the inertia pawl and the spring properties are such that it is only at and above a specific acceleration that the inertia pawl rotates from the neutral position to one of its intercepting positions.

The acceleration thresholds are higher than accelerations normally subjected to the vehicle during normal operation.

Advantageously, the engaging portion may be generally symmetric in the rotation plane of the inertia pawl. Hereby, tailoring the inertia pawl for the dual direction functionality is simplified. The entire inertia pawl may be symmetric in the rotation plane of the inertia pawl.

In some embodiments, the engaging portion may comprise a first and a second engaging member, wherein in the first intercepting position the first engaging member comes in contact with a first slide intercepting element attached to the rail profile, and in the second intercepting position the second engaging member comes in contact with a second slide intercepting element attached to the rail profile. The fact that the engaging members come in contact with slide engaging elements advantageously provides an increased overall friction force between roof panel slider and the rail profile. Thus, the friction between the inertia pawl and the rail profile absorbs the kinetic energy of the roof panel.

The material of the inertia pawl is advantageously a harder material than a material of the intercepting elements.

The first and second slide intercepting elements may each comprise protrusions from the rail profile. Accordingly, there may be plurality of protrusions in the rail profile which the engaging members may intercept.

The spacing between the protrusions may be gradually smaller closer to the end portions of the railing profile. In this way, the friction between the inertia pawl and the rail profile may become gradually higher, which advantageously provides a gradually increasing braking efficiency the further the slider manages to slide under the influence of an acceleration higher than any one of the acceleration thresholds.

A rotation path of the engaging portion may intercept a plane of the rail portion. Thus, even without protrusions, the inertia pawl can provide the braking force for at least partly preventing the sliding motion of the slider in the event of a collision. The plane of the rail portion may be a planar portion which is generally planar along the length of the rail profile.

In embodiments, the rotation path of the engaging portion is such that when the engaging portion intercepts the rail profile, the angle between a line, from the contact point between the engaging portion and the rail profile, to the center of rotation of the inertial pawl on the rotation axis, and a vertical of the rail profile, is smaller than 45 degrees or even smaller than 30 degrees. In this way leverage may be provided by the moving slider such as to further improve the prevention of the sliding motion.

In some embodiments, the inertia pawl and the spring may be configured such that the absolute value of the first acceleration threshold is substantially equal to the absolute value of the second acceleration threshold.

The first acceleration threshold and the second acceleration threshold may be related to estimated acceleration caused by collisions with the vehicle.

In some embodiments, the inertia pawl may comprise a through-hole at the rotation axis, wherein a rigid axle of the slider is rotatably attached through the through-hole.

The roof panel may comprise a glass panel.

The spring may be a hair-pin spring. Other possible spring configurations include using two springs arranged to act on the inertia pawl in different rotational directions, or a single spring pulling on the inertia pawl directly downwards towards or into the rail profile.

According to a second aspect of the invention, there is provided a vehicle comprising the roof panel arrangement according to any one of the above-mentioned embodiments or variations of the first aspect.

This second aspect of the invention provides similar advantages as discussed above in relation to the previous aspect of the invention.

Further features of, and advantages with, the present invention will become apparent when studying the appended claims and the following description.

### Brief Description of the Drawings

These and other aspects of the present invention will now be described in more detail, with reference to the appended drawings showing example embodiments of the invention, wherein:
Fig. 1 conceptually illustrates a vehicle comprising a vehicle roof panel;
Fig. 2 illustrates an example embodiment of a roof panel arrangement for a vehicle;
Fig. 3 is a close up view of the inertia pawl and part of the slider of the embodiment shown in fig. 2;
Fig. 4A shows a perspective cross-section of a rail profile with a slider arranged therein and a view of the inertia pawl in a neutral position;
Fig. 4B illustrates the embodiment in fig. 4A with the engaging portion in a first intercepting position;
Fig. 4C illustrates the embodiment in fig. 4A with the engaging portion in a second intercepting position; and
Fig. 5 illustrates a further embodiment of a roof panel arrangement.

### Detailed Description of Example Embodiments

In the present detailed description, various embodiments of the system according to the present invention are mainly described with reference to a vehicle in the form of a car having a roof top panel. However, the present invention may equally be used with other vehicles such as trucks and buses, etc. Thus, this invention may be embodied in many different forms and should not be construed as limited to the embodiments set forth herein; rather, these embodiments are provided for thoroughness and completeness, and fully convey the scope of the invention to the skilled person. Like reference characters refer to like elements throughout.

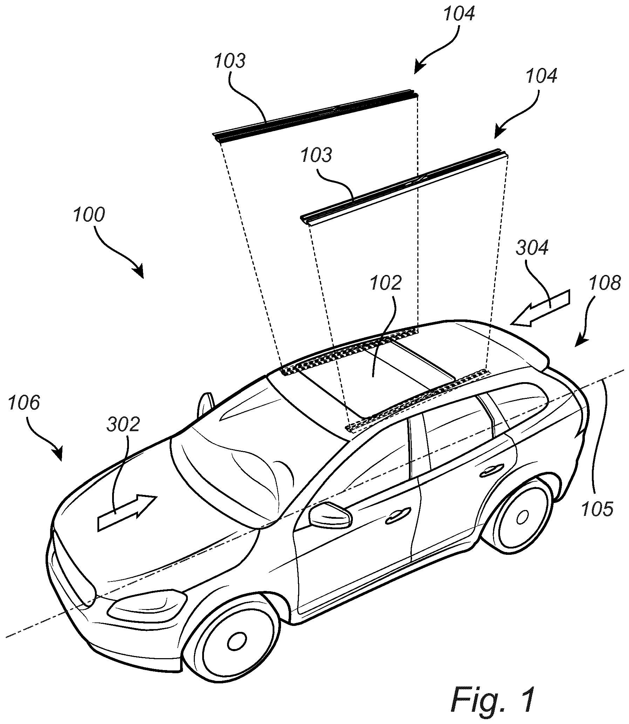

Fig. 1 illustrates a vehicle in the form a car 100 comprising a vehicle roof panel 102 attached to a slider 103 which is slidable in a rail profile 104. The rail profile 104 is generally arranged along a longitudinal axis 105 of the vehicle. The roof panel 102 is openable by sliding the slider 103 which is attached to the roof panel 102 along the rail profile. Moreover, the roof panel 102 may have to be pushed upwards before the sliding motion may be performed. The roof panel 102 may be a panoramic glass roof panel.

In the event that the car 100 is subject to a collision and the roof panel is in an open position, the acceleration on the car 100 may cause the roof panel 102 to begin sliding along the rail profile 104. For instance, if the collision is a frontal collision, then the roof panel 102 may be caused to slide towards the front 106 of the vehicle. In contrast, if the collision is a rear collision on the car 100, then the roof panel 102 may be caused to slide towards the rear 108 of the vehicle. As will be described with reference to the following drawings, the inventive concept provides for at least partly preventing the undesired sliding motion of the roof panel.

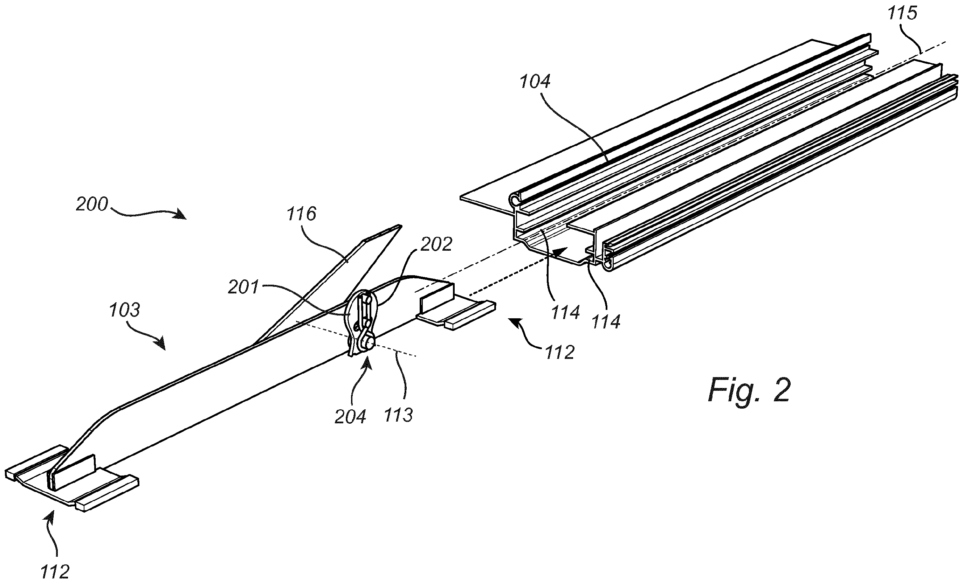

Fig. 2 illustrates an example embodiment of a roof panel arrangement 200 for a vehicle. A slider 103 is shown detached from a rail profile 104. The slider may be slid into the rail profile 104 to thereby be slidably attached to the rail profile 104. The slider 103 may be slid along the rail profile 104 but may not be vertically removed from the rail profile 104. The slider may comprise slider feet 112 that match elongated grooves 114 in the rail profile 104. The slider may be attached to a roof panel (not shown in fig. 2, see 102 in fig. 1) via a linking arm 116.

An inertia pawl 201 is rotatably attached to the slider 103 at a rotation axis 113 which is generally perpendicular to the longitudinal axis 115 of the rail profile 104. The longitudinal axis 115 is parallel with the sliding direction of the slider 103 when sliding in the rail profile 104. As will be described in more detail with reference to subsequent drawings, the inertia pawl 201 comprises a main body 202 and an engaging portion 204. The inertia pawl is spring loaded around its rotation axis 113 by a spring.

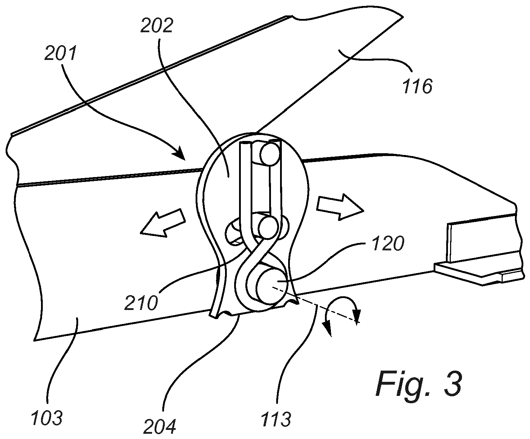

Fig. 3 is a close up view of the inertia pawl 201 and part of the slider 103. As mentioned above, the inertia pawl 201 comprises a main body 202 and an engaging portion 204. The inertial pawl 201 is adapted such that the engaging portion 204 and the main body 202 are arranged on opposite sides of the rotation axis 113 with the engaging portion 204 closer to the bottom of the rail profile compared to the main body 202.

The inertia pawl 201 is spring loaded about its rotation axis 113 by a spring 210. In this example embodiment, the spring is a hair pin spring 210. In fig. 3, the inertia pawl 201 is shown in a neutral position in which the spring 210 is not loaded in any direction. If the inertia pawl rotates in a rotational direction about its rotation axis 113, the spring 210 attempts to bring the inertia pawl back to this neutral position.

The inertia pawl 201 is rotatably connected to the slider 103 at a rigid axle 120 attached to the slider 103 and attached in a through-hole in the inertia pawl 201.

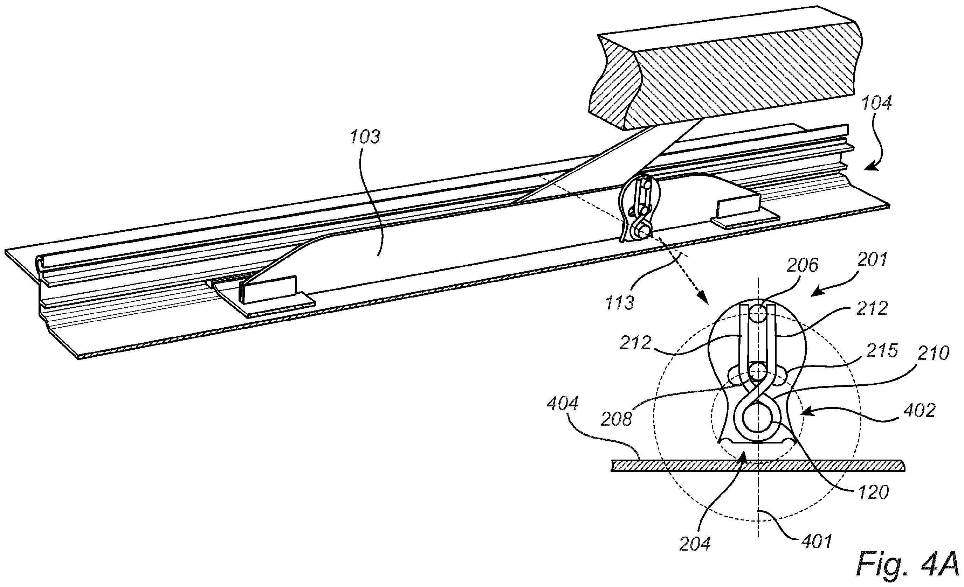

Fig. 4A shows a perspective cross-section of a rail profile 104 with a slider 103 arranged therein and a view of the inertia pawl 201 in the rotation plane of the inertia pawl 201. The inertia pawl 201 is symmetric in this plane with respect to a symmetry axis 401 perpendicular to the rotation axis 113 of the inertia pawl. In fig. 4A, the inertia pawl is in a neutral position whereby the engaging portion 204 is not in contact with the rail profile 104. In particular, the engaging portion 204 is not in contact with the bottom plane 404 of the rail profile 104.

The inertia pawl 201 comprises a protruding pin 206 which protrudes such that the legs 212 of the spring 210 are positioned on opposite side of the pin 206 so that they make contact with the pin when the inertia pawl 201 rotates in a respective direction. The spring 210 is arranged centered about the rotation axis 113 of the inertia pawl. Further, a second protruding pin 208 attached to the slider 103 is arranged through an arc-shaped through-hole 215 formed as a trace in the inertia pawl in such a way the legs 212 of the spring 210 are positioned on opposite side also of the second pin 208. The pins 208 and 208 are used for ensuring that the spring 210 can apply a force to the inertia pawl 201 to counter-act a rotation of the inertia pawl as will be described below.

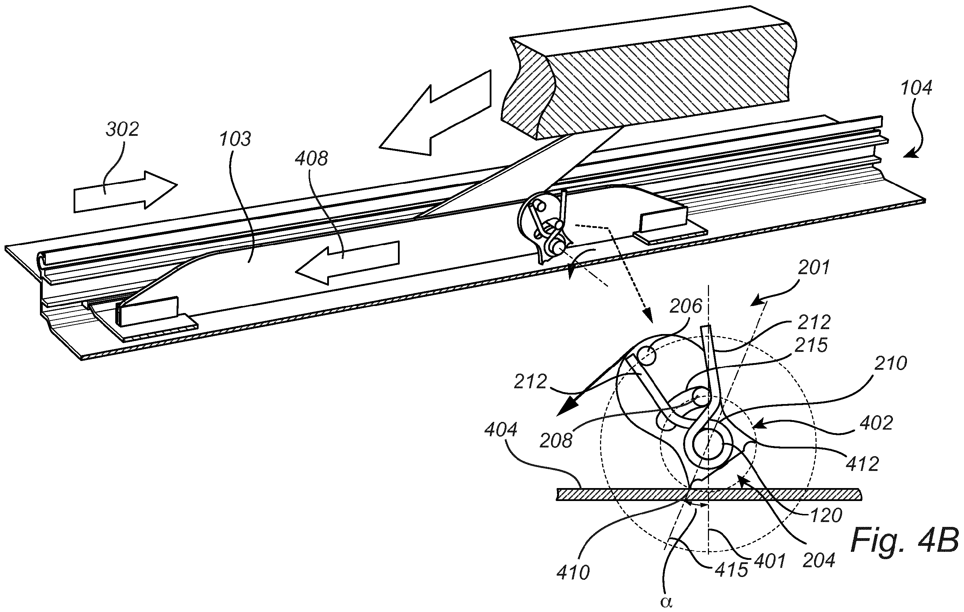

Fig. 4B illustrates the perspective cross-section of the roof panel arrangement 200 in fig. 4A, but under the influence of acceleration in a first direction 302. This acceleration is assumed to exceed a first threshold acceleration which is related to an estimated acceleration caused by a collision with the vehicle. The spring properties and the inertia of the main body are such that the inertia pawl 201 rotates with sufficiently high force to compress the spring by pushing with the pin 206 on one of the spring legs 212, while at the same time the second pin 208 maintains the other leg 212 in its original position. Since the rotation path 402 of the engaging portion 204 intercepts the bottom plane 404 of the rail profile, the engaging portion makes contact with the rail profile 103 at the bottom plane 404. Accordingly, the inertia pawl 201 has rotated away from the neutral position in a first rotational direction such that the engaging portion 204 has rotated into a first intercepting position where it has made contact with the rail profile 103. In this position, the contact between the engaging portion 204 and the rail profile 103 causes a braking force for at least partly preventing a sliding motion of the slider 103 in a first sliding direction 408.

In this example embodiment, the engaging portion 204 comprises a first 410 and a second 412 engaging member. In the first intercepting position the first engaging member 412 comes in contact with the rail profile 103.

The rotation of the inertia pawl 201 causes the engaging portion 204 to come in contact with the rail profile 103 at the bottom plane 404. At the moment when contact is made, the slider is still sliding in the sliding direction 408. As the slider 103 attempts to slide further, leverage is provided by the moving slider on the engaging portion 204 such that the prevention of the sliding motion becomes more efficient. Thus the shape of the engaging portion should firstly be such that its rotation path 402 intercepts the bottom plane 404 of the rail profile, but the diameter of the rotation path 402 should preferably not be too large in order to benefit from the leverage effect. The rotation path 402 of the engaging portion may be such that when the engaging portion intercepts the rail profile at the bottom plane 404, the angle α between a line 415 from the contact point between the engaging portion 204 (e.g. engaging member 410 or 412) and the rail profile to the center of rotation of the inertial pawl on the rotation axis 113, and a vertical 401 of the rail profile is less than 45 degrees, preferably less than 30 degrees.

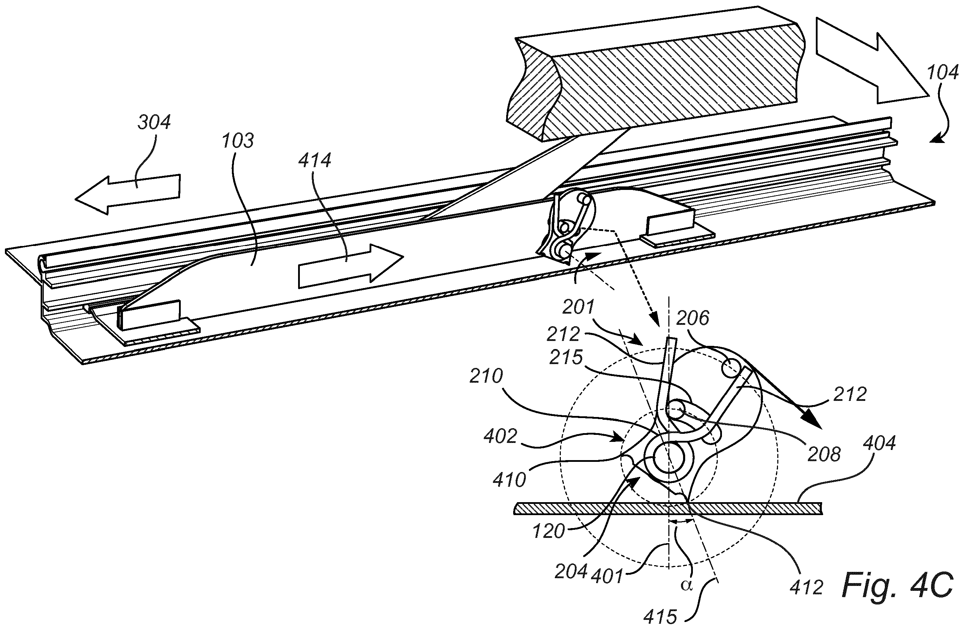

Fig. 4C illustrates the perspective cross-section of the roof panel arrangement 200 in fig. 4A, but under the influence of acceleration in a second direction 304. This acceleration is assumed to exceed a second threshold acceleration which is related to an estimated acceleration caused by a collision with the vehicle. Analogously to the description of the rotation of the inertia pawl in the first rotational direction with reference to fig. 4B, the inertia pawl is illustrated in fig. 4C when rotated in the second rotational direction into a second intercepting position where the engaging portion 204 has made contact with the rail profile 103. In this second intercepting position, the contact between the engaging portion 204 and the rail profile 103 causes a braking force for at least partly preventing a sliding motion of the slider 103 in a second sliding direction 414.

In the second intercepting position, the second engaging member 412 comes in contact with the rail profile 103.

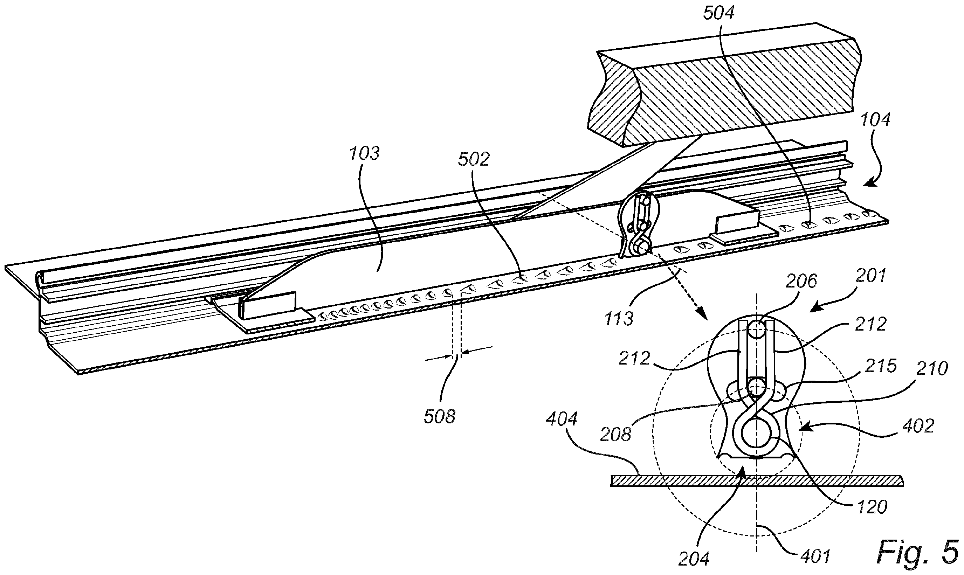

Fig. 5 illustrates a further embodiment of a roof panel arrangement 600. The difference between the roof panel arrangement 600 and the one shown in fig. 4A, is that there are slide intercepting elements 502 (only one is numbered) and 504 (only one is numbered) attached to the rail profile 103. In the first intercepting position (fig. 4B), the first engaging member 410 comes in contact with a first slide intercepting element (e.g. the one numbered 502) attached to the rail profile. In the second intercepting position (fig. 4C), the second engaging member 412 comes in contact with a second slide intercepting element (e.g. the one numbered 504) attached to the rail profile. Further, the distance 508 between the slide intercepting members may become gradually smaller closer to the end of the rail profile 103. Here the slide intercepting members 502, 504 are shown as protrusions in the rail profile. The slide intercepting members may also equally well be realized by a roughened surface in the bottom of the rail profile 103.

The inertia pawl according to the mentioned embodiments may be made from a rigid material such as a metal or a composite plastic- or carbon-based material, preferably harder than the material of the rail profile.

The person skilled in the art realizes that the present invention by no means is limited to the preferred embodiments described above. On the contrary, many modifications and variations are possible within the scope of the appended claims.

## Claims

1. A roof panel arrangement (200) for a vehicle (100), comprising:
- a slider (103) attached to a roof panel (102), the slider is slidably attached to a rail profile (104) for opening a roof window by sliding the roof panel along a longitudinal axis (105) of the vehicle,
- an inertia pawl (200) rotatably attached to the slider at a rotation axis (113) generally perpendicular to an axis parallel with the longitudinal axis of the rail profile, the inertia pawl comprises a main body (202) and an engaging portion (204) arranged on opposite sides of the rotation axis,
wherein the rotation of the inertial pawl about the rotation axis is spring loaded with a neutral position with the engaging portion closer to the rail profile than the main body, the engaging portion is separated from the rail profile in the neutral position,
wherein the inertia of the main body and the spring properties of the spring (210) are such that, when under the influence of an acceleration in a first direction (302) exceeding a first threshold acceleration, the inertia pawl rotates away from the neutral position in a first rotational direction such that the engaging portion rotates into a first intercepting position for causing a braking force for at least partly preventing a sliding motion of the slider in a first sliding direction,
**characterized in that**
the inertia of the main body and the spring properties of the spring are such that, when under the influence of an acceleration in a second direction (304) exceeding a second threshold acceleration, the inertia pawl rotates away from the neutral position in a second rotational direction opposite the first rotational direction such that the engaging portion rotates into a second intercepting position for causing a braking force for at least partly preventing a sliding motion of the slider in a second sliding direction.

2. The roof panel arrangement according to claim 1, wherein the engaging portion is generally symmetric in the rotation plane of the inertia pawl.

3. The roof panel arrangement according to any one of claims 1 or 2, wherein the engaging portion comprises a first (410) and a second (412) engaging member, wherein
in the first intercepting position the first engaging member comes in contact with a first slide intercepting element (502) attached to the rail profile, and
in the second intercepting position the second engaging member comes in contact with a second slide intercepting element (504) attached to the rail profile.

4. The roof panel arrangement according to claim 3, wherein the first and second slide intercepting elements each comprises protrusions from the rail profile.

5. The roof panel arrangement according to claim 4, wherein the spacing between the protrusions is gradually smaller closer to the end portion of the railing profile.

6. The roof panel arrangement according to any one of the preceding claims, wherein a rotation path (402) of the engaging portion intercepts a plane (404) of the rail portion.

7. The roof panel arrangement according to claim 6, wherein the rotation path (402) of the engaging portion is such that when the engaging portion intercepts the rail profile, the angle (α) between a line, from the contact point between the engaging portion (204) and the rail profile, to the center of rotation of the inertial pawl on the rotation axis, and a vertical of the rail profile is smaller than 45 degrees.

8. The roof panel arrangement according to claim 7, wherein the angle (α) is smaller than 30 degrees.

9. The roof panel arrangement according to any one of the preceding claims, wherein the absolute value of the first acceleration threshold is substantially equal to the absolute value of the second acceleration threshold.

10. The roof panel arrangement according to any one of the preceding claims, wherein the first acceleration threshold and the second acceleration threshold are related to estimated accelerations caused by collisions with the vehicle.

11. The roof panel arrangement according to any one of the preceding claims, wherein the inertia pawl comprises a through-hole at the rotation axis, wherein a rigid axle of the slider is rotatably attached through the through-hole.

12. The roof panel arrangement according to any one of the preceding claims, comprising a glass panel.

13. The roof panel arrangement according to any one of the preceding claims, wherein the spring is a hair pin spring.

14. A vehicle comprising the roof panel arrangement according to any one of the preceding claims.

## Patentansprüche

1. Dachpaneelanordnung (200) für ein Fahrzeug (100), umfassend:
- ein Schiebeelement (103), das an einem Dachpaneel (102) angebracht ist, wobei das Schiebeelement verschiebbar an einem Schienenprofil (104) zum Öffnen eines Dachfensters durch Verschieben des Dachpaneels entlang einer Längsachse (105) des Fahrzeugs angebracht ist,
- eine Trägheitsklinke (200), die drehbar an dem Schiebeelement an einer Drehachse (113) angebracht ist, die im Allgemeinen senkrecht zu einer Achse parallel zu der Längsachse des Schienenprofils ist, wobei die Trägheitsklinke einen Hauptkörper (202) und einen Eingriffsabschnitt (204) umfasst, die an entgegengesetzten Seiten der Drehachse angeordnet sind,
wobei die Drehung der Trägheitsklinke um die Drehachse federbelastet mit einer Neutralstellung ist, wobei der Eingriffsabschnitt näher zu dem Schienenprofil als der Hauptkörper ist, wobei der Eingriffsabschnitt von dem Schienenprofil in der Neutralstellung getrennt ist,
wobei die Trägheit des Hauptkörpers und die Federeigenschaften der Feder (210) derart sind, dass, unter der Einwirkung einer Beschleunigung in einer ersten Richtung (302), die eine erste Schwellenbeschleunigung übersteigt, sich die Trägheitsklinke von der Neutralstellung weg in eine erste Drehrichtung dreht, so dass sich der Eingriffsabschnitt in eine erste Abfangstellung dreht, um eine Bremskraft zu bewirken, um zumindest teilweise eine Schiebebewegung des Schiebeelements in eine erste Verschieberichtung zu verhindern,
**dadurch gekennzeichnet, dass**
die Trägheit des Hauptkörpers und die Federeigenschaften der Feder derart sind, dass, unter der Einwirkung einer Beschleunigung in einer zweiten Richtung (304), die eine zweite Schwellenbeschleunigung übersteigt, sich die Trägheitsklinke von der Neutralstellung weg in eine zweite Drehrichtung dreht, die entgegengesetzt zu der ersten Drehrichtung ist, so dass sich der Eingriffsabschnitt in eine zweite Abfangstellung dreht, um eine Bremskraft zu bewirken, um zumindest teilweise eine Schiebebewegung des Schiebeelements in eine zweite Verschieberichtung zu verhindern.

2. Dachpaneelanordnung nach Anspruch 1, wobei der Eingriffsabschnitt im Allgemeinen in der Drehebene der Trägheitsklinke symmetrisch ist.

3. Dachpaneelanordnung nach einem der Ansprüche 1 oder 2, wobei der Eingriffsabschnitt ein erstes (410) und ein zweites (412) Eingriffselement umfasst, wobei
in der ersten Abfangstellung das erste Eingriffselement in Kontakt mit einem ersten Verschiebeabfangelement (502) kommt, das an dem Schienenprofil angebracht ist, und
in der zweiten Abfangstellung das zweite Eingriffselement in Kontakt mit einem zweiten Verschiebeabfangelement (504) kommt, das an dem Schienenprofil angebracht ist.

4. Dachpaneelanordnung nach Anspruch 3, wobei das erste und das zweite Verschiebeabfangelement jeweils Vorsprünge von dem Schienenprofil umfassen.

5. Dachpaneelanordnung nach Anspruch 4, wobei der Abstand zwischen den Vorsprüngen näher zu den Endabschnitten des Schienenprofils allmählich kleiner wird.

6. Dachpaneelanordnung nach einem der vorhergehenden Ansprüche, wobei ein Drehweg (402) des Eingriffsabschnitts eine Ebene (404) des Schienenabschnitts schneidet.

7. Dachpaneelanordnung nach Anspruch 6, wobei der Drehweg (402) des Eingriffsabschnitts derart ist, dass, wenn der Eingriffsabschnitt das Schienenprofil abfängt, der Winkel (α) zwischen einer Linie von dem Kontaktpunkt zwischen dem Eingriffsabschnitt (204) und dem Schienenprofil zum Drehzentrum der Trägheitsklinke an der Drehachse und einer Vertikalen des Schienenprofils kleiner als 45 Grad ist.

8. Dachpaneelanordnung nach Anspruch 7, wobei der Winkel (α) kleiner als 30 Grad ist.

9. Dachpaneelanordnung nach einem der vorhergehenden Ansprüche, wobei der Absolutwert des ersten Beschleunigungsschwellenwerts im Wesentlichen gleich zum Absolutwert des zweiten Beschleunigungsschwellenwerts ist.

10. Dachpaneelanordnung nach einem der vorhergehenden Ansprüche, wobei der erste Beschleunigungsschwellenwert und der zweite Beschleunigungsschwellenwert mit geschätzten Beschleunigungen in Bezug stehen, die durch Kollisionen mit dem Fahrzeug verursacht werden.

11. Dachpaneelanordnung nach einem der vorhergehenden Ansprüche, wobei die Trägheitsklinke eine Durchgangsöffnung an der Drehachse umfasst, wobei eine Starrachse des Schiebeelements durch die Durchgangsöffnung drehbar angebracht ist.

12. Dachpaneelanordnung nach einem der vorhergehenden Ansprüche, umfassend ein Glaspaneel.

13. Dachpaneelanordnung nach einem der vorhergehenden Ansprüche, wobei die Feder eine Haarnadelfeder ist.

14. Fahrzeug, umfassen die Dachpaneelanordnung nach einem der vorhergehenden Ansprüche.

## Revendications

1. Agencement de panneau de toit (200) pour un véhicule (100), comprenant :
- un coulisseau (103) attaché à un panneau de toit (102), le coulisseau est attaché de façon coulissante à un profilé de rail (104) pour ouvrir une fenêtre de toit en faisant coulisser le panneau de toit le long d'un axe longitudinal (105) du véhicule,
- un cliquet d'inertie (200) attaché de façon rotative au coulisseau au niveau d'un axe de rotation (113) généralement perpendiculaire à un axe parallèle à l'axe longitudinal du profilé de rail, le cliquet d'inertie comprend un corps principal (202) et une partie d'entrée en prise (204) agencée sur des côtés opposés de l'axe de rotation,
dans lequel la rotation du cliquet d'inertie autour de l'axe de rotation se fait par ressort, avec une position neutre avec la partie d'entrée en prise plus près du profilé de rail que le corps principal, la partie d'entrée en prise est séparée du profilé de rail dans la position neutre,
dans lequel l'inertie du corps principal et les propriétés de ressort du ressort (210) sont telles que, lorsqu'il est sous l'influence d'une accélération dans une première direction (302) dépassant une première accélération de seuil, le cliquet d'inertie entre en rotation à l'opposé de la position neutre dans une première direction de rotation de telle sorte que la partie d'entrée en prise entre en rotation dans une première position d'interception pour causer une force de freinage pour au moins partiellement empêcher un mouvement de coulissement du coulisseau dans une première direction de coulissement,
**caractérisé en ce que**
l'inertie du corps principal et les propriétés de ressort du ressort sont telles que, lorsqu'il est sous l'influence d'une accélération dans une seconde direction (304) dépassant une seconde accélération de seuil, le cliquet d'inertie entre en rotation à l'opposé de la position neutre dans une seconde direction de rotation opposée à la première direction de rotation de telle sorte que la partie d'entrée en prise entre en rotation dans une seconde position d'interception pour causer une force de freinage pour au moins partiellement empêcher un mouvement de coulissement du coulisseau dans une seconde direction de coulissement.

2. Agencement de panneau de toit selon la revendication 1, dans lequel la partie d'entrée en prise est généralement symétrique dans le plan de rotation du cliquet d'inertie.

3. Agencement de panneau de toit selon l'une quelconque des revendications 1 ou 2, dans lequel la partie d'entrée en prise comprend un premier (410) et un second (412) organes d'entrée en prise, dans lequel
dans la première position d'interception, le premier organe d'entrée en prise entre en contact avec un premier élément d'interception de coulissement (502) attaché au profilé de rail, et
dans la seconde position d'interception, le second organe d'entrée en prise entre en contact avec un second élément d'interception de coulissement (504) attaché au profilé de rail.

4. Agencement de panneau de toit selon la revendication 3, dans lequel les premier et second éléments d'interception de coulissement comprennent chacun des protubérances à partir du profilé de rail.

5. Agencement de panneau de toit selon la revendication 4, dans lequel l'espacement entre les protubérances est progressivement plus petit plus près de la partie d'extrémité du profilé de rail.

6. Agencement de panneau de toit selon l'une quelconque des revendications précédentes, dans lequel un chemin de rotation (402) de la partie d'entrée en prise intersecte un plan (404) de la partie de rail.

7. Agencement de panneau de toit selon la revendication 6, dans lequel le chemin de rotation (402) de la partie d'entrée en prise est tel que, lorsque la partie d'entrée en prise intersecte le profilé de rail, l'angle (α) entre une ligne, depuis le point de contact entre la partie d'entrée en prise (204) et le profilé de rail jusqu'au centre de rotation du cliquet d'inertie sur l'axe de rotation, et une verticale du profilé de rail est inférieur à 45 degrés.

8. Agencement de panneau de toit selon la revendication 7, dans lequel l'angle (α) est inférieur à 30 degrés.

9. Agencement de panneau de toit selon l'une quelconque des revendications précédentes, dans lequel la valeur absolue du premier seuil d'accélération est sensiblement égale à la valeur absolue du second seuil d'accélération.

10. Agencement de panneau de toit selon l'une quelconque des revendications précédentes, dans lequel le premier seuil d'accélération et le second seuil d'accélération sont connexes à des accélérations estimées causées par des collisions avec le véhicule.

11. Agencement de panneau de toit selon l'une quelconque des revendications précédentes, dans lequel le cliquet d'inertie comprend un trou débouchant au niveau de l'axe de rotation, dans lequel un tourillon rigide du coulisseau est attaché de façon rotative par l'intermédiaire du trou débouchant.

12. Agencement de panneau de toit selon l'une quelconque des revendications précédentes, comprenant un panneau en verre.

13. Agencement de panneau de toit selon l'une quelconque des revendications précédentes, dans lequel le ressort est un ressort en épingle à cheveux.

14. Véhicule, comprenant l'agencement de panneau de toit selon l'une quelconque des revendications précédentes.
